# DEMANDE DE BREVET EUROPEEN

(11) **EP 0 574 341 A1**
(43) Date de publication de la demande: **15.12.1993**
(21) Numéro de dépôt: 93420242.5
(22) Date de dépôt: 11.06.1993
(51) Int. Cl.: D06F 75/14, C02F 1/48

(54) **Fer à repasser comportant un élément magnétique anti-tartre**

(30) Priorité: 12.06.1992 FR 9207383
(71) Demandeur: SEB S.A., F-69130 Ecully (FR)
(72) Inventeur: Brandolini, Jean-Louis, F-42100 St. Etienne (FR)

(57) **Abrégé**

- Protection contre le dépôt de tartre
- Fer à repasser à vapeur comportant un réservoir d'eau (1) relié à une chambre de vaporisation (2), et des moyens anti-tartre montés en association avec le circuit d'écoulement d'eau entre le réservoir (1, 17, 20) et la chambre de vaporisation (2), caractérisé en ce que les moyens anti-tartre sont constitués par au moins un élément magnétique (15) associé avec le circuit d'écoulement, de manière à générer un champ magnétique auquel est soumis le flux d'eau circulant dans ledit circuit.
- Fer à repasser à vapeur pourvu d'un élément magnétique anti-tartre.

## Description

La présente invention se rapporte au domaine technique général de la protection des appareils destinés à être en contact avec de l'eau, et pour lesquels il convient d'éviter ou de limiter les dépots de calcaire ou de tartre.

La présente invention concerne un fer à repasser à vapeur comportant un réservoir d'eau relié à une chambre de vaporisation, ainsi que des moyens anti-tartre montés en amont de la chambre de vaporisation.

Il doit être précisé que par l'expression fer à repasser à vapeur, il convient d'entendre tous les types de fer à vapeur actuellement disponibles, qu'ils comportent un réservoir d'eau intégré ou interne au fer à repasser, ou externe c'est à dire auxiliaire.

Il est connu, qu'à la longue on observe dans tous les types de fer à repasser à vapeur, un dépot de tartre dans les circuits et zones en contact avec l'eau destinée à être vaporisée. Si aucun traitement anti-calcaire n'est prévu, on observe à la longue un colmatage prononcé voire complet de certaines parties du circuit d'eau, et en particulier des chicanes de sorties de vapeur au niveau de la semelle.

Pour lutter contre ce phénomène d'entartrage, plusieurs solutions techniques sont actuellement utilisées dans les fers à repasser à vapeur. Il est ainsi déjà connu d'avoir recours à la solution dite des fers à "auto-nettoyage". Cette technique consiste à concevoir le fer à repasser de telle façon qu'après l'opération de repassage, le boisseau régulant le débit d'eau entre le réservoir et la chambre de vaporisation, soit directement extractable par l'utilisateur. Cette extraction permet l'évacuation immédiate du reliquat d'eau du réservoir par les sorties de vapeur situées sur la semelle, favorisant ainsi l'évacuation d'au moins une partie du calcaire non encore incrusté. Cet effet d'entrainement du calcaire est amplifié par le passage de l'eau au contact de la semelle encore chaude. Il doit être considéré que le recours à la technique des fers dits "auto-nettoyants" constitue un moyen permettant de ralentir le dépot du calcaire et par là même d'allonger la durée de vie des fers. En revanche, il s'avère que cette technique est globalement insuffisante pour lutter efficacement contre le dépot du calcaire dit incrustant, et que par ailleurs son efficacité vis-à-vis du dépot du calcaire non incrustant est également limitée et dans tous les cas dépendante d'une température de semelle relativement élevée. L'efficacité globale de tels fers "auto-nettoyants" n'est donc pas optimale et limitée à des fers haute température, la nécessité de prévoir un élément complémentaire extractable compliquant par ailleurs la réalisation de tels appareils.

Il a également déjà été proposé d'avoir recours au montage d'une cassette anti-calcaire branchée dans le circuit d'eau d'un fer à repasser. Ces cassettes contiennent une masse de résine échangeuse d'ions dont la fonction est de piéger les ions responsables du dépot de calcaire. Le montage de ces cassettes nécessite une conception spécifique des fers à repasser, ce qui constitue une contrainte complémentaire de fabrication. Par ailleurs, de telles cassettes doivent être périodiquement changées, lorsque la résine est saturée. En outre, l'appréciation du degré de saturation de la résine, se fait dans la plupart des cas par appréciation visuelle de l'utilisateur. Il s'avère en réalité que le virage coloré de la résine est le plus souvent progressif et mal apprécié par l'utilisateur qui change la cassette soit trop tôt, soit trop tard. Dans ce dernier cas, un dépot de calcaire est alors possible, ce qui conduit à un raccourcissement de la durée de vie du fer à repasser.

Dans un autre domaine technique, il est par ailleurs connu de limiter les risques d'entartrage dans les canalisations en les soumettant à un champ magnétique. Cette technique est utilisée dans le cas de canalisations fixes afin de préserver l'effet de polarisation des macromolécules qui ont traversé le champ magnétique.

La présente invention vise précisément à fournir un fer à repasser à vapeur ne présentant pas les inconvénients énumérés ci-dessus et dans lequel le dépot de calcaire est limité de manière efficace et permanente à l'aide de moyens simples et adaptables à tous les types de fers sans avoir à modifier leur conception.

Les objets assignés à l'invention sont atteints à l'aide d'un fer à repasser à vapeur comportant un réservoir d'eau relié à une chambre de vaporisation, et des moyens anti-tartre montés en association avec le circuit d'écoulement d'eau entre le réservoir et la chambre de vaporisation, caractérisé en ce que les moyens anti-tartre sont constitués par au moins un élément magnétique associé avec le circuit d'écoulement, de manière à générer un champ magnétique auquel est soumis le flux d'eau circulant dans ledit circuit.

D'autres particularités et avantages de l'invention apparaitront et ressortiront plus en détails à la lecture de la description faite ci-après, en référence aux dessins annexés, donnés à titre d'exemples illustratifs non limitatifs dans lesquels :
- la figure 1 représente selon une coupe transversale longitudinale un fer à repasser à vapeur conforme à l'invention.
- la figure 2 représente selon une coupe transversale longitudinale un fer à repasser à vapeur à réservoir extractable.
- la figure 3 montre selon une coupe transversale schématique, une variante de réalisation d'un fer à repasser à vapeur conforme à l'invention.
- la figure 4 montre selon une coupe transversale schématique, une variante de réalisation conforme à l'invention représentant un fer à repasser à vapeur pourvu d'un évaporateur externe.
- la figure 5 montre selon une coupe transversale, une autre variante de réalisation conforme à l'invention dans laquelle l'élément magnétique est intégré dans la chambre de vaporisation.
- La figure 6 montre une variante de réalisation représentant un fer à repasser pourvu de canaux de vaporisation.

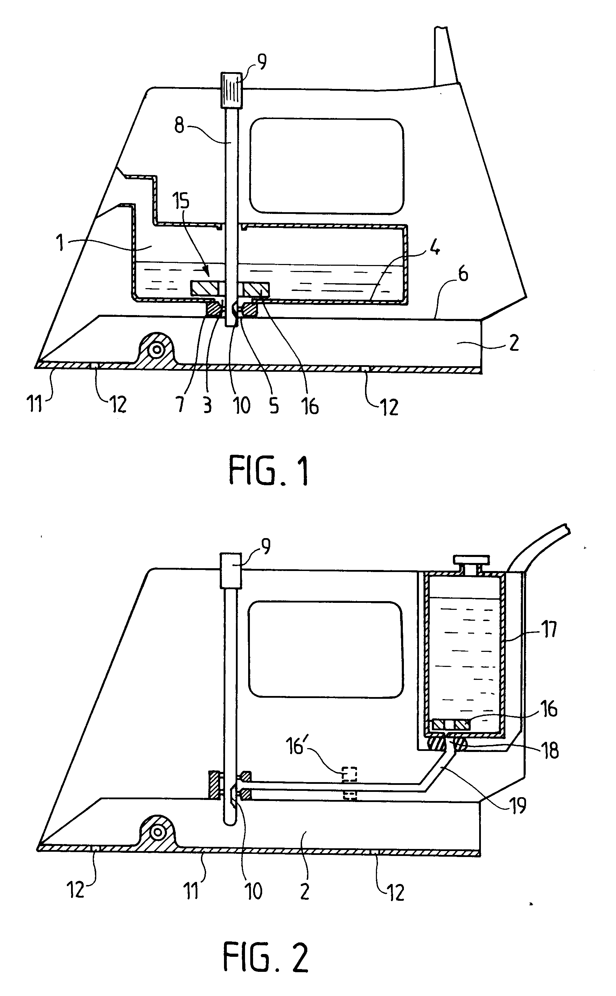

La figure 1 montre un fer à repasser à vapeur de structure classique comportant un réservoir d'eau 1 intégré dans le corps du fer, ledit réservoir étant disposé au-dessus d'une chambre de vaporisation 2, et relié à cette dernière par des moyens de liaison. Dans le fer à vapeur représenté à la figure 1, les moyens de liaison comportent un orifice de passage 3 formant sortie, ménagé dans la face inférieure 4 du réservoir d'eau 1, et une ouverture d'entrée 5 ménagée à travers la paroi supérieure 6 de la chambre de vaporisation 2. L'orifice de passage 3 et l'ouverture 5 sont alignés l'un par rapport à l'autre et séparés par un joint entretoise 7 pourvu d'un perçage central formant siège, aligné avec l'orifice de passage 3 et l'ouverture 5 pour délimiter avec ces derniers le circuit de passage entre le réservoir 1 et la chambre de vaporisation 2. De manière connue en soi, les moyens de réglage du débit de vapeur sont constitués d'un boisseau 8 formant une tige de réglage pourvue à son extrémité supérieure d'un bouton de réglage 9, et agencé de manière à pouvoir coulisser longitudinalement à travers l'orifice de passage 3, l'ouverture 5 et le joint 7. De manière également connue, le boisseau 8 est pourvu vers son extrémité inférieure, dans la zone venant en contact avec le perçage central du joint 7, d'une gorge 10. Cette dernière permet, suivant sa position verticale par rapport au perçage central du joint 7 de régler le débit d'eau passant du réservoir 1 vers la chambre de vaporisation 2. Sous la chambre de vaporisation 2, le fer à vapeur est pourvu de manière classique d'une semelle de repassage 11 destinée à venir en contact avec l'article à repasser, et pourvue sur toute sa surface d'une série d'orifices de vaporisation 12.

Le fer à repasser à vapeur, conforme à l'invention montrée aux figures 1 à 4, comporte en amont de la chambre de vaporisation 2 en considérant le sens d'écoulement du flux d'eau à partir du réservoir 1 vers ladite chambre 2, des moyens anti-tartre 15 constitués par un élément magnétique, associé avec le circuit d'écoulement ainsi réalisé. De manière avantageuse, les moyens anti-tartre 15 sont constitués par un aimant permanent 16 disposé relativement au flux d'eau de manière à générer un champ magnétique agissant sur les macromolécules composant l'eau qui circule dans le circuit d'écoulement. Tel que cela est montré à la figure 1, l'aimant permanent 16 est constitué de préférence par un anneau magnétique disposé dans le réservoir d'eau 1 à proximité de l'orifice 3. Avantageusement, l'aimant permanent 16 est disposé dans le réservoir 1 en appui contre la face 4 pour que son axe de révolution soit sensiblement coaxial à celui de l'orifice de passage 3. De cette façon, au moins une partie, et en règle générale la totalité du flux d'eau, passe à travers l'aimant permanent 16 et est soumis au champ magnétique qu'il génère.

L'anneau magnétique peut être fixé sur la face inférieure 4 par tout moyen connu et être de tout type et de toute composition connue, et même être protégé extérieurement par un revêtement isolant amagnétique. La puissance du champ magnétique doit être suffisante pour que les macromolécules du type ou à base de CACO3, potassium, manganèse etc..., soient soumises à une polarisation apte à désorganiser la structure associée des macromolécules en vue de les ramener à leur stade initial naturel de molécules en suspension dans l'eau.

De manière préférentielle, l'anneau magnétique sera réalisé de manière à posséder un vecteur champ magnétique orienté sensiblement selon son axe de révolution. Dans un tel cas, lors du montage de l'anneau magnétique selon la disposition montrée à la figure 1, l'anneau magnétique sera avantageusement disposé contre la face inférieure 4 de telle manière que le vecteur champ magnétique soit dirigé en sens inverse de passage du flux d'eau entre le réservoir 1 et la chambre de vaporisation 2, le pole sud étant en regard de ladite face 4.

Grâce à un tel montage, il a pu être constaté, que contrairement aux enseignements classiques de l'art antérieur, la rémanence magnétique des molécules soumises au champ magnétique pouvait être conservée malgré les multiples et divers mouvements de va-et-vient du fer à repasser. Il semblait en effet acquis que l'effet bénéfique du champ magnétique était annulé lorsque les molécules, après avoir subi l'action dudit champ, étaient soumises à une agitation mécanique qui avait tendance à entraîner une formation d'agglomérat. Dans le cas présent, il a pu être mis en évidence que dans un fer à repasser l'action du champ magnétique sur l'eau destinée à être vaporisée, permettait d'agir de manière bénéfique sur le dépot du tartre qui devenait moins incrustant, et de retarder ainsi son dépot. L'eau ainsi traitée permet la vaporisation des molécules de tartre sous une forme favorisant l'élimination naturelle du tartre par les orifices 12.

La variante de réalisation montrée à la figure 2 ne diffère de celle montrée à la figure 1 que par le montage de l'anneau magnétique dans un réservoir d'eau 17 amovible. L'anneau magnétique peut être disposé et fixé dans la partie inférieure du réservoir d'eau 17 au droit d'un orifice de sortie 18 à partir duquel débute une conduite d'évacuation 19 débouchant par l'intermédiaire du boisseau 8 dans la chambre de vaporisation 2.

A titre de variante complémentaire il doit être noté que l'anneau magnétique peut être fixé dans le fer à repasser à l'extérieur du réservoir d'eau 1, dès l'instant où son champ magnétique soumet l'eau du fer à son action. Tel que cela est montré à la figure 2 en ligne pointillée, l'aimant permanent 16' constitué par un anneau magnétique peut être monté par exemple de manière à entourer la conduite d'évacuation 19.

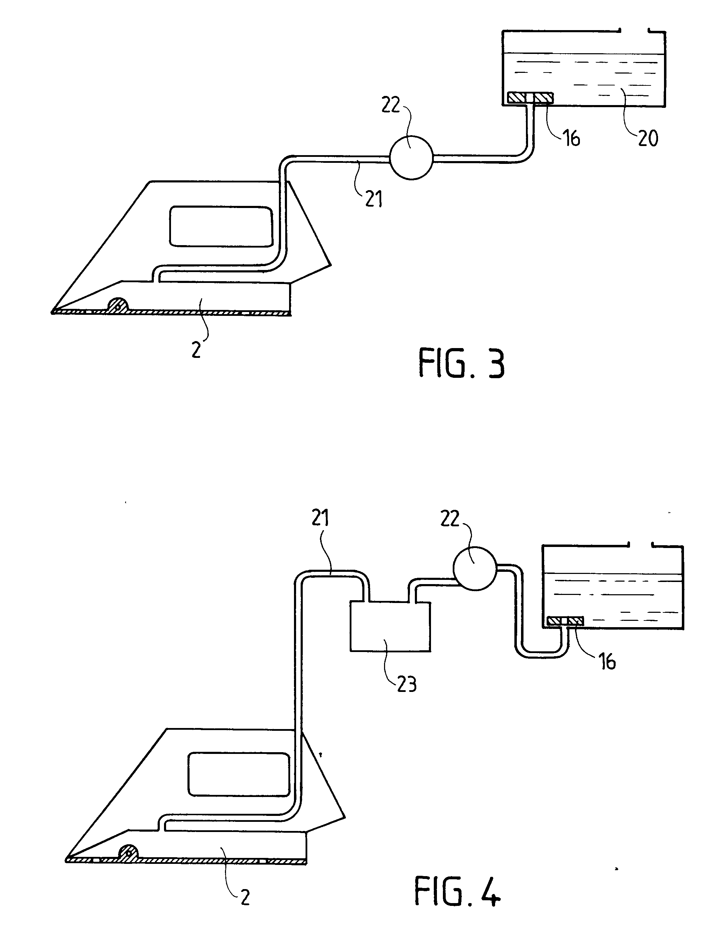

La figure 3 montre une variante de réalisation qui ne diffère des variantes précédentes que par le montage de l'aimant permanent 16 dans un réservoir d'eau auxiliaire 20, externe au fer à repasser. Dans un tel cas, le réservoir d'eau auxiliaire 20 est relié à la chambre de vaporisation 2, par l'intermédiaire d'un flexible 21 et d'une pompe 22. La figure 4 montre une variante de réalisation qui ne diffère de celle montrée à la figure 3 que par l'interposition d'un dispositif complémentaire évaporateur-bouilleur 23 sur le flexible 21 entre la pompe 22 et la chambre de vaporisation 2. Dans l'une et l'autre des variantes, il a pu être constaté une diminution de la tendance à l'incrustation du tartre et une amélioration de son élimination.

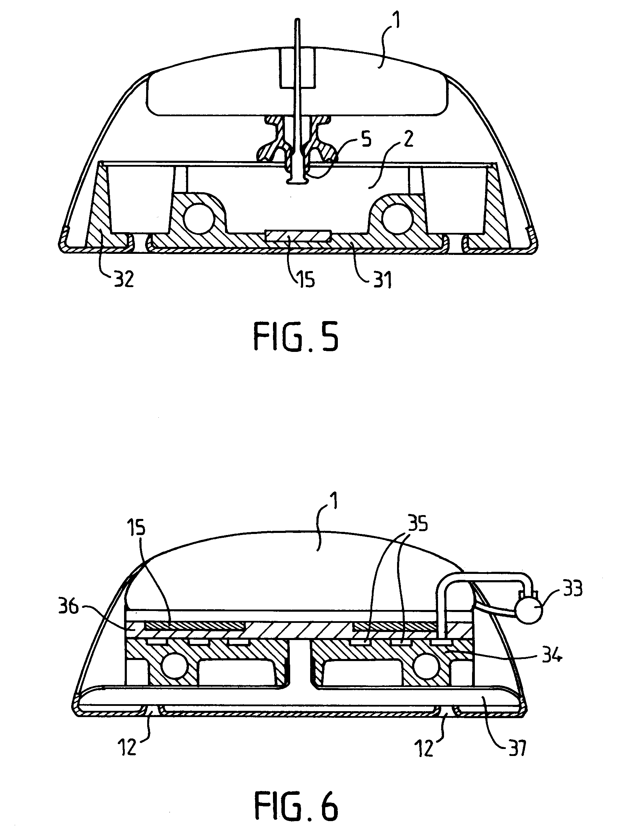

La figure 5 montre une variante de réalisation dans laquelle l'élément magnétique 15 est disposé directement dans la chambre de vaporisation 2, et de préférence intégré dans la paroi de fond 31 de ladite chambre. L'élément magnétique 15 est de préférence intégré par sertissage dans la paroi de fond 31, au droit de l'ouverture d'entrée 5 de la chambre de vaporisation 2. De cette façon l'eau provenant du réservoir 1 tombe directement sur l'élément magnétique 15 et est en conséquence soumise à son action de polarisation. En raison de la diminution de la conduction thermique entre la paroi de fond 31 et l'élément magnétique 15 dû au sertissage, la température de l'élément magnétique 15 est inférieure à celle du corps chauffant 32. Cette particularité crée un effet secondaire anti-caléfaction sur les gouttes d'eau tombant sur l'élément magnétique 15 en favorisant leur vaporisation spontanée.

Selon une variante préférentielle ne modifiant pas les phénomènes décrits précédemment, l'élément magnétique 15 peut être serti sous la paroi de fond 31, laquelle est par exemple réalisée en un matériau amagnétique suffisamment mince pour conserver l'effet anti-caléfaction.

La figure 6 montre une variante de réalisation d'un fer à repasser comportant un réservoir 1 associé à une pompe 33 et à un micro-bouilleur instantané 34 dans lequel sont ménagés une série de canaux 35 de vaporisation d'eau. L'élément magnétique 15, par exemple annulaire, est monté au-dessus ou en-dessous des canaux 35 de manière à générer un champ magnétique agissant sur le flux d'eau et de vapeur circulant dans lesdits canaux. Avantageusement, l'élément magnétique 15 est intégré par sertissage dans une plaque support 36 servant à fermer la partie supérieure des canaux 35. Après vaporisation, la vapeur d'eau est conduite dans une chambre ou des cheneaux 37, puis dirigée vers les orifices de vaporisation 12.

A titre de variante complémentaire, il convient également de noter que l'élément magnétique 15 peut être constitué d'un électro-aimant.

Dans tous les cas, il a pu être montré que l'utilisation nouvelle d'un élément magnétique dans un fer à repasser avait une influence bénéfique et retardatrice sur le dépot du tartre.

## Revendications

1. Fer à repasser à vapeur comportant un réservoir d'eau (1) relié à une chambre de vaporisation (2), et des moyens anti-tartre montés en association avec le circuit d'écoulement d'eau entre le réservoir (1, 17, 20) et la chambre de vaporisation (2), caractérisé en ce que les moyens anti-tartre sont constitués par au moins un élément magnétique (15) associé avec le circuit d'écoulement, de manière à générer un champ magnétique auquel est soumis le flux d'eau circulant dans ledit circuit.

2. Fer à repasser selon la revendication 1 caractérisé en ce que l'élément magnétique (15) est un aimant permanent (16).

3. Fer à repasser selon la revendication 2 caractérisé en ce que l'aimant permanent (16) est protégé par un isolant amagnétique.

4. Fer à repasser selon l'une des revendications 1 à 3 caractérisé en ce que l'élément magnétique (15) est disposé dans la chambre de vaporisation (2).

5. Fer à repasser selon la revendication 4 caractérisé en ce que l'élément magnétique (15) est intégré dans la paroi de fond (31) de la chambre de vaporisation (2).

6. Fer à repasser selon la revendication 5 caractérisé en ce que l'élément magnétique (15) est intégré par sertissage, dans la paroi de fond (31), au droit de l'ouverture d'entrée (5) de la chambre de vaporisation (2).

7. Fer à repasser selon l'une des revendications 1 à 3 caractérisé en ce que l'élément magnétique (15) est monté en amont de la chambre de vaporisation (2).

8. Fer à repasser selon la revendication 7 caractérisé en ce que l'élément magnétique (15) est constitué par un anneau magnétique à travers lequel passe au moins une partie du flux d'eau.

9. Fer à repasser selon la revendication 8 caractérisé en ce que l'anneau magnétique est disposé dans le réservoir d'eau (1, 17, 20) ou à l'extérieur dudit réservoir.

10. Fer à repasser selon les revendications 8 et 9 caractérisé en ce que l'anneau magnétique est disposé à proximité d'un orifice de passage (3) du réservoir (1, 17, 20) formant sortie.

11. Fer à repasser selon la revendication 10 caractérisé en ce que l'anneau magnétique est disposé avec son axe de révolution sensiblement coaxial à celui de l'orifice de passage (3).

12. Fer à repasser selon les revendications 10 ou 11 caractérisé en ce que le réservoir (1) comporte un boisseau (8) de commande du débit d'eau monté dans l'orifice de passage (3), l'anneau magnétique étant monté de manière à entourer ledit boisseau (8).

13. Fer à repasser selon l'une des revendications de 1 à 3 caractérisé en ce que l'élément magnétique (15) est monté au-dessus ou au dessous de canaux (35) de vaporisation ménagés dans un micro-bouilleur instantané (34).

14. Fer à repasser selon l'une des revendications 1 à 13 caractérisé en ce que l'élément magnétique (15) est disposé pour que son vecteur champ magnétique soit orienté sensiblement parallèlement au flux d'eau, et de préférence dirigé en sens inverse.
